# EUROPEAN PATENT SPECIFICATION

(11) **EP 3 878 323 B1**
(45) Date of publication and mention of the grant of the patent: **07.06.2023**
(21) Application number: 19835557.0
(22) Date of filing: 21.11.2019
(51) Int. Cl.: A47J 31/42, A47J 43/046

(54) **MACHINE FOR PREPARING JUICE FROM A FROZEN FOOD PREPARATION**
MASCHINE ZUR SAFTBEREITUNG AUS TIEFGEFRORENEN LEBENSMITTELN
MACHINE POUR LA PRÉPARATION DE JUS À PARTIR D'ALIMENTS CONGELÉS

(43) Date of publication of application: 15.09.2021
(73) Proprietor: IFGOOD FZ-LLC, Rak (AE)
(72) Inventor: ALVES FINO, João José, 2410-137 Leiria (PT)
(74) Representative: Pereira da Cruz, Joao
(86) International application number: PCT/PT2019/050044
(87) International publication number: WO 2021/101398

(56) References cited:
- EP-A1- 2 468 159
- US-A1- 2016 029 844
- US-B1- 9 155 330

## Description

### SCOPE AND BACKGROUND OF THE INVENTION

The present invention falls within the scope of juice-making machines, namely relating to a natural juice preparation machine from an individual portion of a frozen food preparation, preferably fruits, in a container that can be coupled to the machine.

The market of machines designed for home and professional use for the preparation of beverages such as coffees, teas and juices has undergone a very fast and versatile transformation in order to satisfy a highly competitive and demanding market. However, a solution combining the quick and easy extraction of a 100% natural juice with a reduced need for post-use cleaning is not yet known.

Therefore, the present invention arises with the need to fill this gap in the market, i.e. a juice preparation machine that allows the preparation of a quality natural juice, without the user having to select the raw material, prepare it and place it in the machine, but rather simply placing a container with a frozen food preparation into the machine. Simultaneously, it was also desired that the solution found could provide a fast cleaning of the equipment between uses and cause minimal waste.

Some of the currently available solutions provide the option to mix and/or crush fruits so as to prepare a juice; however, those are too generic solutions which are not focused on a demanding niche market, being limited only to mixing the solid elements suspended in a volume of liquid, not comprising heating sources aimed at defrosting the frozen foods.

The patent application with the publication number TWM5194667Y discloses a liquid mixer to which an inverted cup is coupled, but differs from the present invention in that it does not have an automatic water addition mechanism, nor a heating source for defrosting the preparation.

The patent application with the publication number TWM298965Y discloses a juice extractor of the blender type, having a blade in the centre of the motor shaft; however, it also differs from the present invention in that it does not have an automatic water addition mechanism, nor a heating source for defrosting the preparation. US 2016/029844 shows a device for preparing food from frozen ingredients similar to that of the present invention, but fails to disclose a circular resistor which is traversed by the drive shaft of the motor.

The particular characteristic of the present invention is that this machine is designed for the extraction of juices from a frozen fruit preparation. As with other solutions for home or semi-professional machines, such as the machines aimed at making tea, various types of coffees, cappuccino and hot chocolate, there is still no similar solution for providing a 100% natural-quality juice. The present innovation results from the need to satisfy users since the goal was to deliver something guaranteedly healthy and without the addition of food colourings or preservatives, avoiding the need for processes like pasteurisation or pressurisation.

Thus, the present invention has the following advantages comparatively to the state of the art:
- a 100%-natural juice is obtained with no added colourings or preservatives;
- made from a ready-to-process preparation, without direct handling of food;
- minimum waste;
- easy cleaning;
- convenient and fast system for both home and professional use.

### SUMMARY OF THE INVENTION

It is thus the object of the present invention a machine for preparing natural juices from a frozen food preparation previously packed in a sealed or closed container or cup (19) which, upon removal of a seal or lid, is coupled to the machine.

Thus, the juicer comprises a digital interface (8) and two units that are essential for its operation, these being a pre-dilution unit, comprising:
- a water tank (5) inside the machine;
- a water pump (4) for pumping the water towards a tubular resistor (3) for heating the water;
- a water outlet nozzle (9);
- a grid (10) for placing a cup (19);
and a grinding and heating unit, which comprises:
- a fitting block (12) comprising a circular resistor (2) traversed in its centre by a drive shaft (14) of a motor (1);
- a blade block (20), which is detachable from the machine, having a snap ring (22), a metal base (21) and on one face of the metal base (21) a cutting blade (24) located in the centre, the blade block (20) being coupled to a cup (19) on the blade side, and the assembly formed by the cup (19) and the blade block (20) simultaneously engaging the fitting block (12) and the drive shaft (14) of a motor (1) located in the centre of the fitting block (12) ;

The water pre-dilution unit is where the first step of the juice preparation step takes place and it comprises a grid (10) for placing the cup (19), the said unit operating from a water tank (5) located inside the machine, the water from the tank (5) being pumped by a water pump (4) towards a tubular resistor (3) to heat the water which, when heated, will come out at the nozzle (9) for executing the pre-dilution of the preparation contained in the cup (19).

Since this is a frozen preparation, it is necessary to pre-dilute with water in order to obtain a juice. At the same time, this dilution is performed with water at a temperature which may vary from 18 to 85°C, depending on the type of final product to be obtained. This dilution with heated water allows the defrosting process of the concentrate to gradually start, while reducing the required operating time, as well as reducing the motor effort on the grinding unit and extending the life of the cutting blades.

The grinding and heating unit is where the step after the pre-dilution of the preparation occurs. The blade block (20) comprising a blade (24) for grinding the preparation is coupled to the cup (19) containing the previously diluted frozen preparation, and the assembly formed by the cup (19) and the blade block (20) is fitted into the fitting block (12) of the machine.

The fitting block (12) has at its base a circular resistor (2), which is traversed in the centre by a drive shaft (14) of a motor (1) that transmits the rotation of the motor (1) to the blade (24) of the blade block (20) when fitted into the fitting block (12), thus grinding the preparation.

The circular resistor (2) which heats the preparation by conduction heat transfer through a metal base (21) contained in the blade block (20) gradually transforms the frozen preparation into a liquid state, with ideal texture and temperature for consumption. It should be explained that grinding alone is not sufficient to defrost the product. Through tests performed while designing a solution, it was found that the preparation subjected only to grinding resulted in a grated ice juice which was too icy for the consumer, or alternatively, further dilution resulted in a too watery juice, with low intensity of flavour and low concentration of nutrients, thus not presenting the ideal conditions to be consumed.

The blade block (20) is a detachable part of the machine having a snap ring (22), and in one face of the snap ring (22) there is a thermally conductive metal base (21) with a gear at the centre, allowing simultaneous engagement in the drive shaft (14) of the motor (1) and in the fitting block (12). On the opposite face, there is a blade (24) which grinds the preparation inside the cup (19) when the cup (19) is coupled to the blade block (20).

It should be noted that the engagement of the blade block (20) into the fitting block (12) allows not only the transmission of rotation of the drive shaft (14) to the cutting blade (24) but also ensures contact of the thermally conductive metal base (21) with the surface of the resistor (2) thus simultaneously occurring the grinding through the cutting blade (24) and the heat transfer between the resistor (2) and the preparation inside the cup, the said preparation being therefore defrosted and ground.

The machine which is the object of the present invention has a digital interface (8) wherein the juice preparation conditions are pre-set and the instructions for performing the pre-dilution and grinding and heating steps are given.

It is also an object of the present invention a method for the preparation of a juice according to the machine described above, and which comprises the following steps:
a) selection of the juice type in the digital interface (8);
b) placing the open cup (19) of frozen fruit preparation on the grid (10);
c) selection of the dilution operation on the digital interface (8);
d) pre-dilution of the preparation with water at a temperature between 18 and 85°C;
e) fitting the cup (19) into the blade block (20) ;
f) fitting the assembly formed between the blade block (20) and the cup (19) into the fitting block (12);
g) selection of the mixing operation which starts grinding and heating the concentrate for 20 to 90 seconds;
h) detaching the assembly formed between the blade block (20) and the cup (19) from the fitting block (12);
i) detaching the blade block (20) from the cup (19) ;
j) product ready for consumption;
k) washing the blade block (20) for next use.

### DESCRIPTION OF THE FIGURES

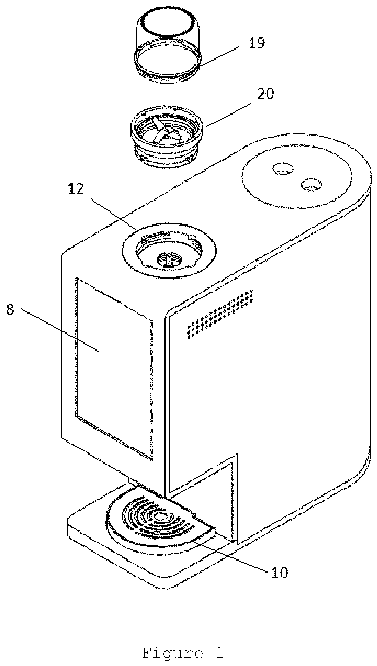

Figure 1 - Schematic perspective view of the machine for preparation of juices, and also the publication figure, which comprises a digital interface (8) wherein the conditions for the juice preparation are pre-set, a grid (10) for placing the cup (19) where, in a first step of the juice preparation, a pre-dilution with water contained within the machine is made, a blade block (20) which is detachable from the machine and to which the cup (19) is coupled, with the assembly formed between the block (20) and the cup (19) being coupled to the fitting block (12).

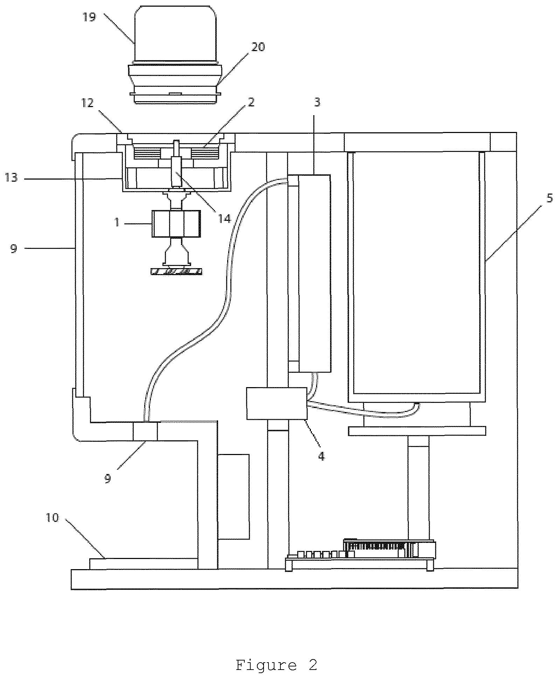

Figure 2 - Representation of a sectional view of the machine which comprises a grid (10) for placing the cup (19), a water tank (5) located inside the machine, the water of the tank (5) being pumped by means of a pump (4) towards a tubular resistor (3) for heating the water which, when heated, will come out at the nozzle (9) for pre-dilution. This figure also presents the cup (19) containing the pre-diluted frozen preparation coupled to the blade block (20), with the assembly formed by the cup (19) and the blade block (20) being fitted into the fitting block (12) having at its base a circular resistor (2) which is traversed in the centre by a drive shaft (14) of a motor (1) with the motor (1) and the circular resistor being attached to the fitting block (12) through a supporting part (13).

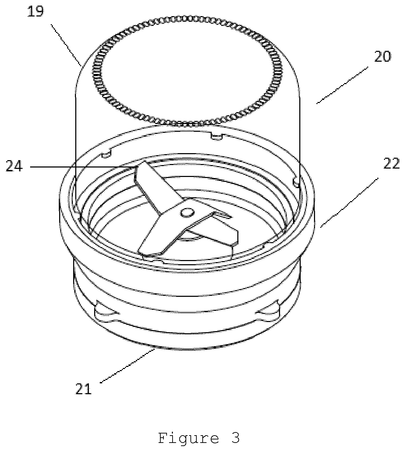

Figure 3 - Schematic representation of the cup (19) coupled to the blade block (20) with a snap ring (22), one metal base (21) being attached to one of its faces and a blade (24) to the opposite side at the centre.

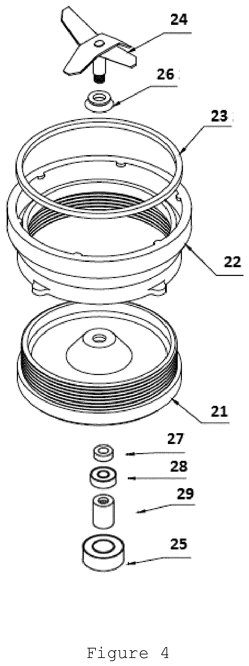

Figure 4 - Exploded view of the elements that make up the blade block (20), which has on one face a metal base (21) screwed to the ring (22) of the blade block (20) containing a sealing ring (23) disposed on its inner perimeter; and on the opposite face, a cutting blade (24), whose shaft crosses the centre of the metal base (21) assisted by a bearing (28) and seals (26 and 27), being screwed by means of a thread to the rotating gear (29), the latter also being assisted by a bearing (25), this set of elements thus allowing rotation of the blade.

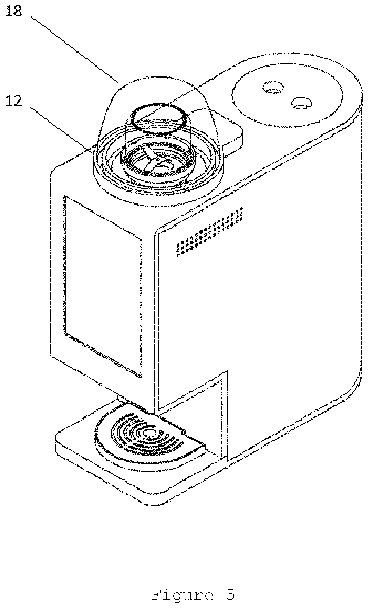

Figure 5 - Schematic perspective view of the machine for preparing juices with the shield (18) placed over the fitting block (12).

### DETAILED DESCRIPTION OF THE INVENTION

Following a general description of the essential characteristics of the invention, preferred embodiments and possible alternatives for their implementation are herein detailed.

The fitting of the blade block (20) to the fitting block (12) is made by means of a snap ring (22) of the blade block (20) that has tabs on its outer perimeter which engage in concavities located internally on the perimeter of the fitting block (12).

The cup (19) is fitted into the blade block (20) by means of a thread.

The blade block (20), on the face which comprises the blade and to which the cup (19) is coupled, has on its inner perimeter an elastic and leak-free sealing ring (23), preferably made of silicone, which ensures the tightness of the assembly formed between the blade block (20) and the cup (19), thus preventing outward spills.

In a preferred embodiment of the invention the cutting blade (20) is fixed to the blade block (20) through the metal base (21) by means of its shaft, sealed by at least two seals (26) and (27), the blade shaft (20) being guided by a rotation bearing (28), and a rotation gear (29) at the end of the blade shaft (24) that engages the drive shaft (14), therefore providing the transmission of rotation between the motor (1) and the cutting blade (24).

In a preferred embodiment of the invention, the metal base (21) is attached to the snap ring (22) by screwing, due to its ease in assembling the components.

In an alternative embodiment of the invention, the metal base (21) is joined to the snap ring (22) by crimping the components, due to the durability of this type of connection, with sealing preventing the accumulation of bacteria.

The resistor (2) and motor (1) are fixed to the machine frame by means of a supporting part (13), which in turn attaches inferiorly to the fitting block (12), surrounding the resistor (2) and wherein the motor (1) is bolted, which enables a strong and aligned clamping of the motor (1) avoiding vibration and oscillation, as well as thermal insulation of the resistor.

In a preferred embodiment of the invention, the circular resistor (2) is thermally insulated at its perimeter in order to prevent heat conduction up to the surface of the fitting block (12), thus preventing burns to the user.

In an alternative embodiment of the invention, the supporting part (13) is made of rigid, high temperature resistant material, also allowing thermal insulation of the resistor (2) peripherally and subsequently extending the longevity of neighbouring components by reducing heat exposure, as well as providing a rigid, solid and long-lasting fixation.

The insulating material of the supporting part (13) may be a high temperature resistant polymer, such as polytetrafluoroethylene or polyamide.

In a preferred embodiment of the present invention, a shield (18) is placed on the cup (19) when it is coupled to the fitting block (12) for the user's protection and safety. Such shield (18) acts as a safety system, so the machine will not operate without it being in place.

In another preferred embodiment of the invention the motor is in a vertical position relative to the bottom of the machine which rests on a horizontal surface, such as a table, in such a way that when the cup (19) is coupled to the machine it is in an inverted position.

The disclosed machine, object of the present invention, is used in the preparation of 100% natural juices without the addition of food colourings or preservatives; additionally it can be used in the production of vegetable or vegetable and fruit juices, as well as even in the production of soups from a frozen base, also without the addition of food colourings.

The possible several uses of this invention represent an obvious advantage of the machine in that it does not limit its use to one single product, but to a wider range of products.

## Claims

1. A machine for preparing juices from a frozen food preparation, **characterized in that** it comprises a digital interface (8), a pre-dilution unit, which comprises:
• a water tank (5) inside the machine;
• a water pump (4) for pumping the water towards a tubular resistor (3) for heating the water;
• a water outlet nozzle (9);
• a grid (10) for placing a cup (19);
and a grinding and heating unit, which comprises:
• a fitting block (12) comprising a circular resistor (2) traversed in its centre by a drive shaft (14) of a motor (1);
• a blade block (20), which is detachable from the machine, having a snap ring (22), a metal base (21) and on one face of the metal base (21) a cutting blade (24) located in the centre, the blade block (20) being coupled to a cup (19) on the blade side, and the assembly formed by the cup (19) and the blade block (20) simultaneously engaging the fitting block (12) and the drive shaft (14) of a motor (1) located in the centre of the fitting block (12) .

2. A machine according to the previous claim, **characterized in that** the snap ring (22) of the blade block (20) has tabs on its outer perimeter which engage in concavities located internally on the perimeter of the fitting block (12).

3. A machine according to the previous claims, **characterized in that** the cup (19) fits into the blade block (20) by means of a thread.

4. A machine according to the previous claims, **characterized in that** the blade block (20) has on its inner perimeter an elastic and leak-free sealing ring (23), preferably made of silicone.

5. A machine according to the previous claims, **characterized in that** the cutting blade (24) is fixed to the blade block (20) through the metal base (21) by means of its shaft, comprising at least two seals (26) and (27), a rotation bearing (28) and a rotation gear (29) at the end of the blade shaft (24).

6. A machine according to the previous claims, **characterized in that** the metal base (21) is attached to the snap ring (22) by screwing or pushing it to fit.

7. A machine according to claims 1 to 5, **characterized in that** the metal base (21) is attached to the snap ring (22) by crimping.

8. A machine according to the previous claims, **characterized in that** the resistor (2) and the motor (1) are fixed to the machine frame by means of a supporting part (13), which in turn attaches inferiorly to the fitting block (12), surrounding the resistor (2) and wherein the motor (1) is bolted.

9. A machine according to the previous claims, **characterized in that** the circular resistor (2) is thermally insulated at its perimeter.

10. A machine according to the claim 8, **characterized in that** the supporting part (13) is made of a rigid and high-temperature resistant material.

11. A machine according to the previous claims 8 or 10, **characterized in that** the material of the supporting part (13) is polytetrafluorethylene or polyamide.

12. A machine according to the previous claims, **characterized in that** it comprises a shield (18) placed over the assembly formed between the cup (19) and the blade block (20) when the latter is coupled to the fitting block (12) .

13. A machine according to the previous claims, **characterized in that** the motor (1) is in a vertical position relative to the bottom of the machine which rests on a horizontal surface, in such a way that when the cup (19) is coupled to the machine it is in an inverted position.

14. Use of the machine disclosed in claims 1 to 13 for the production of fruit and vegetable natural juices and of soups, as well as of cocoa or yogurt-based beverages, wherein milk may be used as an alternative to water.

## Patentansprüche

1. Eine Maschine für die Vorbereitung von Säften aus einer tiefgefrorenen Lebensmittelzubereitung, **dadurch gekennzeichnet, dass** es eine digitale Schnittstelle (8), eine Vorverdünnungseinheit umfasst, welche folgendes umfasst:
• Wassertank (5) im Inneren der Maschine;
• eine Wasserpumpe (4), um das Wasser zu einem Röhrenwiderstand (3), der das Wasser heizt, zu pumpen;
• eine Wasserauslass-Düse (9);
• ein Gitter (10), um einen Becher (19) zu platzieren;
und eine Schleif- und Heizeinheit, die folgendes umfasst:
• ein Einbaublock (12), der einen ringförmigen Widerstand (2) umfasst, der in seinem Zentrum von einer Antriebswelle (14) eines Motors (1) durchquert wird;
• ein Messerblock (20), der von der Maschine trennbar ist, der einen Sprengring (22), einen Metallsockel (21) und auf einer Fläche des Metallsockels ein Scheermesser (24), das im Zentrum platziert ist, aufweist, wobei der Messerblock an einen Becher (19) auf der Seite des Messers gekoppelt ist, und die aus dem Becher (19) und dem Messerblock (20) bestehende Baugruppe gleichzeitig in den Einbaublock (12) und die Antriebswelle (14) eines Motors (1), im Zentrum eines Einbaublocks (12) platziert, eingreifen.

2. Eine Maschine nach vorherigem Anspruch, **dadurch gekennzeichnet, dass** der Sprengring (22) des Messerblocks (20) an seinem äußeren Umfang Laschen aufweist, die, die im Inneren des Umfangs des Einbaublocks (12) befindlichen Vertiefungen, eingreifen.

3. Eine Maschine nach den vorherigen Ansprüchen, **dadurch gekennzeichnet, dass** der Becher (19) mittels eines Gewindes in den Messerblock (20) passt.

4. Eine Maschine nach den vorherigen Ansprüchen, **dadurch gekennzeichnet, dass** der Messerblock (20) in seinem inneren Umfang einen elastischen und leckagefreien Dichtring (23) aufweist, vorzugsweise aus Silikon.

5. Eine Maschine nach den vorherigen Ansprüchen, **dadurch gekennzeichnet, dass** das Scheermesser (24), durch den Metallsockel (21) hindurch mittels seiner Welle, die mindestens zwei Dichtungen (26) und (27), ein Drehlager (28) und ein Drehzahnrad (29) am Ende der Messerwelle (24) umfasst, an den Messerblock (20) begfestigt ist.

6. Eine Maschine nach den vorherigen Ansprüchen, **dadurch gekennzeichnet, dass** der Metallsockel (21) an den Sprengring (22) durch Schrauben oder Schieben verbunden ist.

7. Eine Maschine nach den Ansprüchen 1 bis 5, **dadurch gekennzeichnet, dass** der Metallsockel (21) an den Sprengring (22) durch Crimpen verbunden ist.

8. Eine Maschine nach den vorherigen Ansprüchen, **dadurch gekenzzeichnet, dass** der Widerstand (2) und der Motor (1) an den Maschinenrahmen mittels eines Stützteils (13) begfestigt sind, welches wiederum untem an den Einbaublock (12) verbunden ist, den Widerstand (2) umgeben und worin der Motor (1) verschraubt ist.

9. Eine Maschine nach den vorherigen Ansprüchen, **dadurch gekennzeichnet, dass** der ringförmige Widerstand (2) an seinem Umfang thermisch isoliert ist.

10. Eine Maschine nach den vorherigen Ansprüchen, **dadurch gekennzeichnet, dass** das Stützteil (13) aus einem steifen und hochtemperaturbeständigen Material gefertigt ist.

11. Eine Maschine nach den vorherigen Ansprüchen, **dadurch gekennzeichnet, dass** das Material des Stützteils (13) Polytetrafluorethylen oder Polyamid ist.

12. Eine Maschine nach den vorherigen Ansprüchen, **dadurch gekennzeichnet, dass** es eine Schirmung (18) umfasst, die über die Baugruppe platziert wird, die aus dem Becher (19) und dem Messerblock (20) besteht, wenn der letztere an den Einbaublock (12) gekoppelt ist.

13. Eine Maschine nach den vorherigen Ansprüchen, **dadurch gekennzeichnet, dass** der Motor (1), bezüglich dem Boden der Maschine, in einer vertikalen Position ist, welche auf einer horizontalen Oberfläche liegt, sodass, wenn der Becher (19) an die Maschine gekoppelt ist, dieser in einer invertierten Position ist.

14. Verwendung der in den Ansprüchen 1 bis 13 offenbarten Maschine für die Produktion von natürlichen Früchte- und Gemüsesäften und von Suppen, sowohl als auch von kakao- und joghurtbasierten Getränken, bei denen Milch, als eine Alternative zu Wasser, genutzt werden kann.

## Revendications

1. Une machine pour préparer des jus à partir d'une préparation alimentaire congelée, **caractérisée en ce qu'**elle comprend une interface numérique (8), une unité de pré-dilution, qui comprend :
• réservoir d'eau (5) à l'intérieur de la machine;
• une pompe à eau (4) pour pomper l'eau vers une résistance tubulaire (3) pour chauffer l'eau;
• une buse de sortie d'eau (9);
• une grille (10) pour placer une coupelle (19);
et une unité de broyage et de chauffage, qui comprend:
• un bloc d'ajustement (12) comprenant une résistance circulaire (2) traversée en son centre par un arbre d'entraînement (14) d'un moteur (1);
• un bloc de lames (20), détachable de la machine, comportant un jonc d'arrêt (22), une base métallique (21) et sur une face de la base métallique une lame de coupe (24) située au centre, le bloc de lames étant accouplé à une coupelle (19) du côté de la lame, et l'ensemble formé par la coupelle (19) et le bloc de lames (20) engageant simultanément le bloc d'ajustement (12) et l'arbre d'entraînement (14) d'un moteur (1) situé au centre du bloc d'ajustement (12).

2. Une machine selon la revendication précédente, **caractérisée en ce que** le jonc d'arrêt (22) du bloc de lames (20) a des languettes sur son périmètre extérieur qui s'engagent dans des concavités situées à l'intérieur du périmètre du bloc d'ajustement (12).

3. Une machine selon les revendications précédentes, **caractérisée en ce que** la coupelle (19) s'insère dans le bloc de lames (20) au moyen d'un filetage.

4. Une machine selon les revendications précédentes, **caractérisée en ce que** le bloc de lames (20) présente sur son périmètre intérieur une bague d'étanchéité élastique anti-fuite (23), de préférence en silicone.

5. Une machine selon les revendications précédentes, **caractérisée en ce que** la lame de coupe (24) est fixée au bloc de lames (20) à travers la base métallique (21) par l'intermédiaire de son arbre, comprenant au moins deux joints (26) et (27), un palier de rotation (28) et un engrenage de rotation (29) à l'extrémité de l'arbre de lames (24) .

6. Une machine selon les revendications précédentes, **caractérisée en ce que la** base métallique (21) est fixée à le jonc d'arrêt (22) en la vissant ou en la poussant pour l'ajuster.

7. Une machine selon les revendications 1 à 5, **caractérisée en ce que la** base métallique (21) est fixée à le jonc d'arrêt (22) par sertissage.

8. Une machine selon les revendications précédentes, **caractérisée en ce que** la résistance (2) et le moteur (1) sont fixés au châssis de la machine au moyen d'une pièce de support (13), qui à son tour se fixe inférieurement au bloc d'ajustement (12), entourant la résistance (2), et dans lequel le moteur (1) est verrouillé.

9. Une machine selon les revendications précédentes, **caractérisée en ce que** la résistance circulaire (2) est isolée thermiquement sur son périmètre.

10. Une machine selon les revendications précédentes, **caractérisée en ce que** la pièce de support (13) est réalisée en un matériau rigide et résistant aux hautes températures.

11. Une machine selon les revendications précédentes, **caractérisée en ce que** le matériau de la pièce de support (13) est du polytétrafluoréthylène ou du polyamide.

12. Une machine selon les revendications précédentes, **caractérisée en ce qu'**elle comprend un bouclier (18), placé sur l'ensemble formé entre la coupelle (19) et le bloc de lames (20) lorsque ce dernier est accouplé au bloc d'ajustement (12).

13. Une machine selon les revendications précédentes, **caractérisée en ce que** le moteur (1) est en position verticale par rapport au fond de la machine qui repose sur une surface horizontale, de telle sorte que lorsque la coupelle (19) est accouplée à la machine, elle est en position inversée.

14. Utilisation de la machine divulguée dans les revendications 1 à 13 pour la production de jus naturels de fruits et de légumes et de soupes, ainsi que de boissons à base de cacao ou de yaourt, dans lesquelles le lait peut être utilisé en remplacement de l'eau.
